# EUROPEAN PATENT SPECIFICATION

(11) **EP 1 122 491 B1**
(45) Date of publication and mention of the grant of the patent: **20.08.2003**
(21) Application number: 01300873.5
(22) Date of filing: 31.01.2001
(51) Int. Cl.: F22B 37/56, F22B 1/18, F28G 13/00

(54) **Heat recovery apparatus and method of minimising fouling in a heat recovery apparatus**
Wärmerückgewinnungsvorrichtung und Verfahren zur Minimierung der Verschmutzung in einer Wärmerückgewinnungsvorrichtung
Appareil pour la récupération de chaleur et méthode pour minimiser l'encrassement dans un appareil pour la récupération de chaleur

(30) Priority: 01.02.2000 FI 20000201
(43) Date of publication of application: 08.08.2001
(73) Proprietor: Wärtsilä Technology Oy AB, 00530 Helsinki (FI)
(72) Inventor: Bergman, Ted, 65610 Korsholm (FI)
(74) Representative: Newby, Martin John

(56) References cited:
- WO-A-00/68631
- US-A- 3 903 963
- US-A- 4 577 677
- US-A- 5 839 894

## Description

This invention relates to a heat recovery apparatus comprising a heat transfer space, a gas inlet for supplying gas for passage through the heat transfer space, a gas outlet for removing gas after passage through the heat transfer space, at least two separate heat exchangers arranged in the heat transfer space so that gas passing through the latter pass successively over the heat exchangers, and at least two separate heat transfer medium flow circuits. The invention also relates to a method of minimising fouling in a heat recovery apparatus comprising a heat transfer space in which is arranged successively in a gas flow direction through the heat transfer space at least a first and a second heat exchanger, a gas inlet and a gas outlet, and at least a first and a second heat transfer medium flow circuit.

Utilisation of heat recovery in order to recover energy from hot gases is as such commonly known and found to be of benefit. Typically, however, hot gases contain various impurities depending on their origin. For example a considerable amount of hot gas is generated in heat engines and depending on, inter alia, the fuel used, the combustion gases contain various impurities, for example soot, condensable components, hydrocarbons etc.

US-A-4,869,209 discloses an automatic programmable cleaning system for cleaning heat exchange tubes of a waste heat boiler. As a method of removing deposits from surfaces of heat exchange tubes it is suggested to spray water intermittently into the hot gas flow, whereby any soot disengaged is carried along with the exhaust gases out of the boiler. However, this known method is not optimal for general use. The use of water consumes the energy of the gas unnecessarily to evaporate the water. Furthermore, the need for maintenance and the water consumption itself also affect the serviceability of the method.

It has been noticed specifically that the exhaust gas boilers of combustion engines tend to foul rapidly. Yet keeping the heat surfaces clean is of prime importance for, among other things, maintaining the efficiency of the apparatus. In connection with state of the art combustion engines, and specifically with such installations in which the combustion gases contain condensable components, for example hydrocarbons, such as in connection with gas engines, the cleaning of heat surfaces should be done fairly frequently, typically after every 500 hours of operation. Specifically, when the heat is recovered at different temperature levels and condensation takes place especially at the last heat transfer stage on heat exchanger surfaces at lower temperatures, the efficiency of heat transfer decreases rapidly. In practice in such installations the cleaning of the heat exchanger operating at lower temperature is accomplished so that it is driven empty, whereby its temperature may rise. This causes the condensable components in question to become soft and drain down away from heat surfaces. However this procedure decreases the efficiency of heat recovery because, during the cleaning stage, which may take approximately 8 hours, heat is not recovered by the heat exchanger in question. On the other hand, emptying the heat exchanger in some cases sets demands to its material and construction, specifically due to the fact that being uncooled, its temperature may rise higher than would be desirable. In that case there is also a risk of boiler fire.

In order to maintain the efficiency of heat recovery at an adequate high level and generally to maintain the equipment at optimal state from the point of view of its operation, the heat transfer surfaces must be kept sufficiently clean by cleansing them on a regular basis. Various methods and devices are known from prior art for this purpose, but they still include many restrictions and may be at inadequate level with respect to their operation.

It is an aim of the present invention to provide a heat recovery apparatus and method by means of which it is possible to improve the state of the art and minimise the above mentioned and other problems of the prior art solutions.

According to one aspect of the present invention there is provided heat recovery apparatus comprising a heat transfer space, into which at least two separate heat exchangers have been provided successively in the gas flow direction, a gas inlet and a gas outlet, as well as at least two separate heat transfer medium flow circuits, wherein the arrangement further comprises means for altering the direction of gas flow in the heat transfer space and means for connecting heat transfer medium flow circuits selectively to either of the at least two separate heat exchangers. Such apparatus is specifically suitable for heat recovery from gases containing sticky, adhesive components like condensable hydrocarbons.

The invention is applicable, for example, in connection with a gas engine executing the Otto-cycle, in which the heat transfer medium circuits are operating at different temperature levels. The temperature level of the gas before entering a heat exchanger connected to a first heat transfer medium circuit is typically from 350 - 450°C and after a heat exchanger connected to a second heat transfer medium circuit is typically 180 - 200°C. The heat transfer medium circuits operate typically at temperature levels on average of from 60 - 100°C. It is possible to provide an arrangement in which after the heat surfaces have fouled, specifically through condensing of hydrocarbons, to excessive high level, or otherwise so desired, a mode of operation of the arrangement is altered as will be described below.

In the first mode of operation gas is caused to flow in a heat transfer space first through the first heat exchanger and after that through the second heat exchanger, the heat transfer medium of the first heat transfer medium flow circuit being caused to flow though the first heat exchanger and the heat transfer medium of the second heat transfer medium flow circuit being caused to flow though the second heat exchanger. For example, in a situation when it is detected by a suitable means that the surface of the heat exchangers, specifically of the last one in the gas flow, has become excessively fouled, the gas is caused to flow in a second mode of operation in the heat transfer space first through the second heat exchanger and after that through the first heat exchanger, the heat transfer medium of the first heat transfer medium flow circuit being caused to flow though the second heat exchanger, and the heat transfer medium of the second heat transfer medium flow circuit being caused to flow though the first heat exchanger. In this case the heat exchanger which had been operated at the lower temperature level in the first mode of operation will be operated at the higher temperature level in the second mode of operation, whereas the deposits formed on its surfaces during the first mode of operation will get warmer and their disengagement will take place. Specifically, when sticky and adhesive deposits formed by condensing are in question, the altering of mode of operation according to the invention increases the temperature of the deposits and they become softer and favourably drain along the heat transfer surfaces until they come away from the heat transfer surface and move to the lower section of the heat transfer space, where they may be removed from the system. In this way, while the operation of the arrangement continues, the mode of operation is altered back and forth between the first and the second modes of operation as required.

The operation periods for the first and the second modes of operation may be adapted always according to the circumstances in question. If desired, it is possible to operate mainly the first mode of operation and only during the cleaning operation the second mode of operation. This manner is practised especially when the heat transfer surfaces are dimensioned so that the first heat exchanger has been dimensioned by criteria set mainly by the first heat transfer medium circuit, and the second heat exchanger has been respectively dimensioned by criteria set mainly by the second heat transfer medium circuit. In this case, during the second mode of operation, a part of the heat transfer medium of the second heat transfer medium flow circuit may be guided to bypass the first heat exchanger, whereby a desired heating power may be achieved.

Heat recovery apparatus preferably includes a heat transfer space, which comprises two parallel flow ducts in which at least one heat exchanger is arranged in each, and which flow ducts abut at their other ends on a common space.

The present invention provides distinct benefits compared with the prior art. Firstly, the method is very effective compared, for example, to cleaning with water which does not have much effect on deposits formed by condensed hydrocarbons. Additionally the cleaning of the heat surfaces is done during the normal operating production, whereas the heat recovery is practically unobstructed, and heat losses to e.g. evaporation of water will not take place (as occurs with water cleaning). Thus, by means of the present invention, the heat exchangers can be maintained particularly clean, since the change of the mode of operation may be done always according to the need without deteriorating the operation. Additionally the present invention does not consume any additional agent for cleaning and also the wearing parts is minimised.

The invention will now be described, by way of example only, with reference to the accompanying drawings, in which:
Fig. 1 is a partly sectioned perspective schematic view of a solution of heat recovery apparatus according to invention;
Fig. 2 is a schematic arrangement of the apparatus of Fig. 1 in a first mode of operation;
Fig. 3 is a schematic arrangement of the apparatus of Fig. 1 in a second mode of operation; and
Fig. 4 is a schematic arrangement of another embodiment of heat recovery apparatus according to the invention in its second mode of operation.

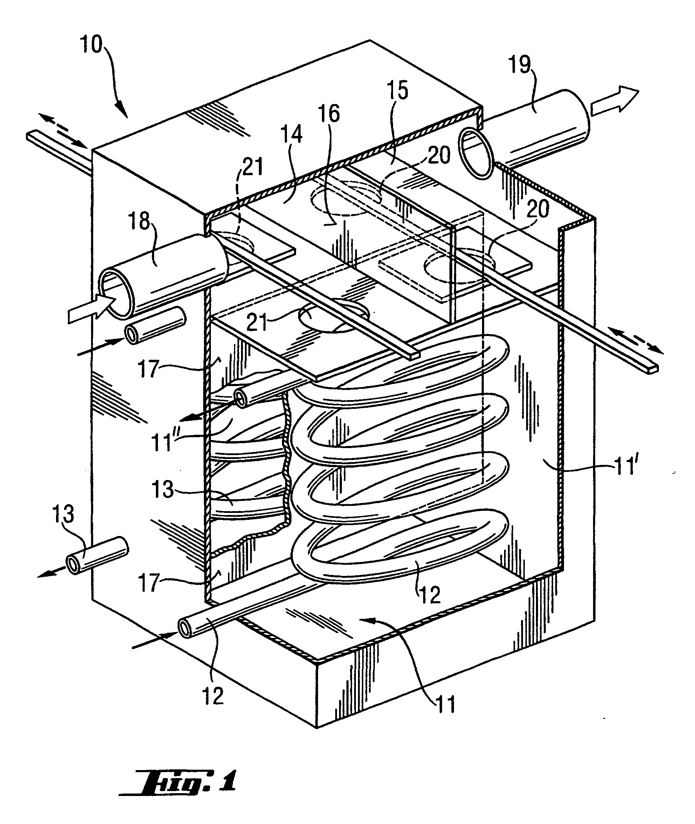

Figure 1 shows a waste heat recovery boiler 10 comprising a heat transfer space 11 bordered by wall structures. The heat transfer space is preferably arranged substantially vertically and preferably comprises two parallel flow ducts 11',11", which communicate at one of their ends (the lower ends as shown) in a common space. The ducts 11',11" are separated by a vertical intermediate wall 17. At least one heat exchanger 12,13 is arranged in each of the parallel flow ducts. In the embodiment shown in Figure 1 the heat exchangers comprise heat transfer surfaces of substantially corresponding heat transfer capability. For example their surface areas may be similar or they may be otherwise arranged such that their operation correspond with each other. Other heat exchangers (not shown) may be provided, preferably in the arrangement between the heat exchangers 12 and 13 in the gas flow direction.

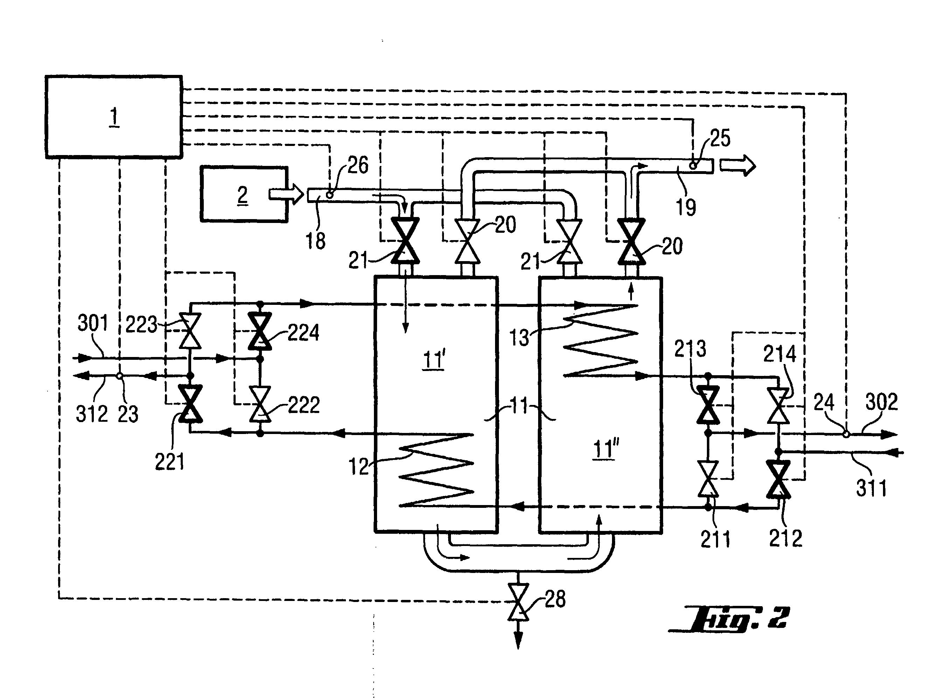

Means are provided at the other ends (the upper ends in Figure 1) of the ducts 11', 11" for altering the direction of gas flow through the ducts. These means include two chambers 14,15 separated from each other by a partition wall 16. In the arrangement shown, the partition wall 16 and the intermediate wall 17 limiting the flow ducts 11', 11" are arranged with their planes vertical, but at an angle, e.g. 90°, to each other. The partition wall 16 also prevents direct flow communication between gas inlet 18 and gas outlet 19. The gas inlet 18 is in operational connection with gas production equipment 2 (shown in Figures 2, 3 and 4).

Advantageously the present invention may be applied to heat recovery of gases from a piston engine utilising gaseous fuel due to the consistency and temperature level of the gases from such an engine. The wall structures of the heat transfer space 11 also operate as walls limiting the chambers 14,15, whereby the structure is advantageously arranged as a unit. The walls limiting the chambers 14,15 may also be constructed, for example, as cooled walls, whereby the walls also include heat transfer surfaces. Additionally, being substantially vertical, the ducts 11', 11" may easily be ventilated.

The chambers 14 and 15 are selectively connectable to either of the flow ducts 11' or 11" so that gas is caused to pass always through both of the ducts. This is accomplished by means of valves 20 and 21 provided in the chambers 14 and 15, respectively. In Fig. 1 the valves are shown as being slide-type valves by means of which when one of the two valve openings 20 (and 21) is open, the other of the two valve openings 20 (and 21) will be closed. Thus as shown in Figure 1, the upper end of duct 11' communicates with chamber 14 via the open valve 21 but does not communicate with chamber 15 because of the closed valve 20 whereas the upper end of duct 11" communicates with chamber 15 via the open valve 20 but does not communicate with chamber 14 because of the closed valve 21. It is clear that the valves may be of different types, for example butterfly-valves. It is essential for the operation that the valves of each chamber are, e.g., positively controlled so that a flow connection from each chamber 14,15 may be established only to one of the ducts 11',11" at a time, and that the gas is caused to pass always through both of the ducts. The flow control of the gas by the slide valves 20,21 shown in Figure 1 takes place by accomplishing a pull or push movement to the shaft of the valves, whereas only either of the ducts 11',11" is in connection with the chamber 14,15.

The following describes the operation of the arrangement with reference to schematic Figure 2. Gas is caused to flow from a gas producing device 2 to the gas inlet 18. After passing through the gas inlet 18, the gas flow is guided in a respective desired manner into the heat transfer space 11. In a first mode of operation shown herein, the gas passes into the duct 11' via the valve 21. (In the illustrated embodiments, the "open" valves are shown in thicker lines and the "closed" valves are shown in normal lines). The gas flows through the duct 11' substantially vertically downwards and passes over the heat exchanger 12 transferring heat to heat transfer medium flowing in the heat exchanger. As can be seen from Figure 2, the heat exchanger 12 is connected to a first heat transfer medium flow circuit 311,312, which operates at a higher temperature level than a second heat transfer medium flow circuit 301,302. The first heat transfer medium flow circuit will be also referred to as an HT-circuit and the second heat transfer medium flow circuit will be referred to as an LT-circuit. The arrangement thus comprises means for connecting heat transfer medium flow circuits 212,214,221,223,222,224,211,213 selectively to either of the at least two separate heat exchangers 12,13. The heat transfer medium from the first heat transfer medium flow circuit 311,312 is guided under control of valves 212,214 either into the heat exchanger 12 located in duct 11' or into the heat exchanger 13 located in duct 11". In the first mode of operation shown in Figure 2, the valve 212 is open (depicted in thicker lines in the drawing) and valve 214 is closed. The heat transfer medium is thus supplied to the heat exchanger 12 which is located in duct 11' and which, accordingly, is now first in the gas flow. The heat transfer medium is guided back to the first heat transfer medium circuit under control of valves 221 and 223. In the first mode of operation shown in Figure 2 the valve 221 is open (depicted in thicker drawn lines) and valve 223 is closed.

After passing the heat exchanger 12 the gas enters a common space connecting the flow ducts 11', 11" from which it is passed to the bottom of the second flow duct 11". The flow changes direction by about 180° from moving downwardly through duct 11c to moving upwardly through duct 11". The gas flows upwardly through the heat exchanger 13 transferring heat to heat transfer medium flowing in the heat exchanger. As can be seen from Figure 2, the heat exchanger 13 is connected to a second heat transfer medium flow circuit 301,302, which operates at lower temperature level than the first heat transfer medium flow circuit 311,312. The heat transfer medium from the second heat transfer medium circuit 301,302 is supplied under the control of valves 222 and 224 either into heat exchanger 12 located in duct 11' or into heat exchanger 13 located in duct 11". As shown in Figure 2, valve 222 is closed and valve 224 is open. Thus the heat transfer medium is passed through the heat exchanger 13 located in the duct 11", which heat exchanger is in the second gas flow - i.e. in the first mode of operation the gas firstly flows downwardly through duct 11' over heat exchanger 12 and then flows upwardly through duct 11" over heat exchanger 13. The arrangement is operated in this first mode of operation for a desired period of time or advantageously until the mode of operation is altered as a result of a predetermined event.

The predetermined event changing the mode of operation may preferably comprise, for example, the following. During the operation of the arrangement, measurement information is collected at a central processing unit 1 at least from the heat transfer process. The collected measurement information is compared with set values, which have been stored into or which are available for the central processing unit 1, and, if the measured information differs from the set values by more than a predetermined amount, the mode of operation of the arrangement is altered. Information on heat transfer medium is collected by temperature senders 23,24 provided in heat transfer medium channels and/or information on gas pressure difference and/or gas temperature is collected by pressure and/or temperature senders 23,24 provided in gas flow channels to be used as measurement information. Thus when, for example, the pressure difference of gas flow increases over a set value or the temperature of heat transfer medium coming from a heat exchanger is not at a predetermined level, the mode of operation is altered.

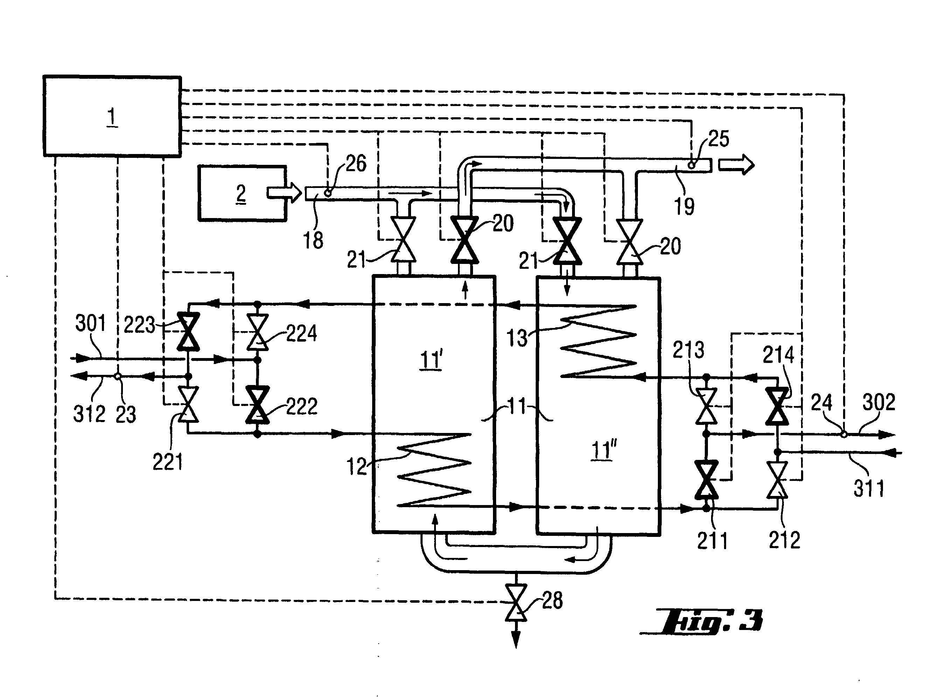

In Figure 3 there is shown the second mode of operation of the arrangement which is described hereinafter. The reference numerals in Figure 3 correspond to those of Figure 2. The gas entering the arrangement is now, in the illustrated second mode of operation, caused to flow from the gas producing device 2 through the gas inlet 18 to the duct 11" via the open valve 21 (shown in thicker lines). The gas flows substantially vertically downwards through the duct 11" and passes over the heat exchanger 13 transferring heat to heat transfer medium flowing in the heat exchanger. As can be seen from the Figure 3, the heat exchanger 13, which was previously connected to the LT-circuit during the first mode of operation, is now connected to the HT-circuit 311,312 whereby a cleaning effect of the heat transfer surfaces is achieved. Any deposits which accumulated on the surfaces of heat exchanger during the first mode of operation get soft. This is especially the case when the arrangement is adapted to heat recovery of exhaust gases of a gas engine. Components condensed and hardened on surfaces soften and drain down away from the surface of the heat exchangers, where from they can be removed out of the arrangement through a discharge opening 28. A valve of the discharge opening is preferably controlled by the central processing unit 1, for example so that the valve is opened for a given time after each change of mode of operation.

The heat transfer medium from the HT-circuit 311,312 is now guided through open valve 214 of the valve pair 212,214 into a heat exchanger 13 in the duct 11", which is now the first duct in the gas flow path. The heat transfer medium is fed back to the first heat transfer medium circuit under control of the open valve 223 of the valve pair 221,223.

After passing downwardly over the heat exchanger 13 the gas enters the common space connecting the bottom of the flow ducts 11',11", from which space the gas is then guided to the bottom of duct 11'. The flow direction of the gas thus changes about 180° from moving downwardly through duct 11" to upwardly through duct 11'. The gas flows upwardly over the heat exchanger 12 in duct 11' transferring heat to heat transfer medium flowing in the heat exchanger. As can be seen from the Figure 3, the heat exchanger 12 is connected to the second heat transfer medium flow circuit i.e. to LT-circuit 301,302. The heat transfer medium from the LT-circuit 301,302 is fed through the open valve 222 of the valve pair 222,244 into the heat exchanger 12 in the duct 11', which heat exchanger is now in the second duct in the gas flow. The arrangement is now operated in this second mode of operation for a desired period of time or advantageously until the mode of operation is altered, again preferably on occurrence of a predetermined event.

A controllable central processing unit 1 or the like is provided for controlling the operation of the valves. The operation of the valves 20,21 which guide or control the gas flow is synchronised with valves 211, 212, 213, 214, 221, 222, 223, 224 controlling the heat transfer medium so that the valves of each chamber are positively controlled so that a flow connection from a chamber may be established only with one of the flow ducts 11', 11" at a time, and so that the gas is always caused to pass through both of the ducts 11',11", and so that the HT-circuit is always connected with a heat exchanger which is upstream of a heat exchanger connected to the LT-circuit.

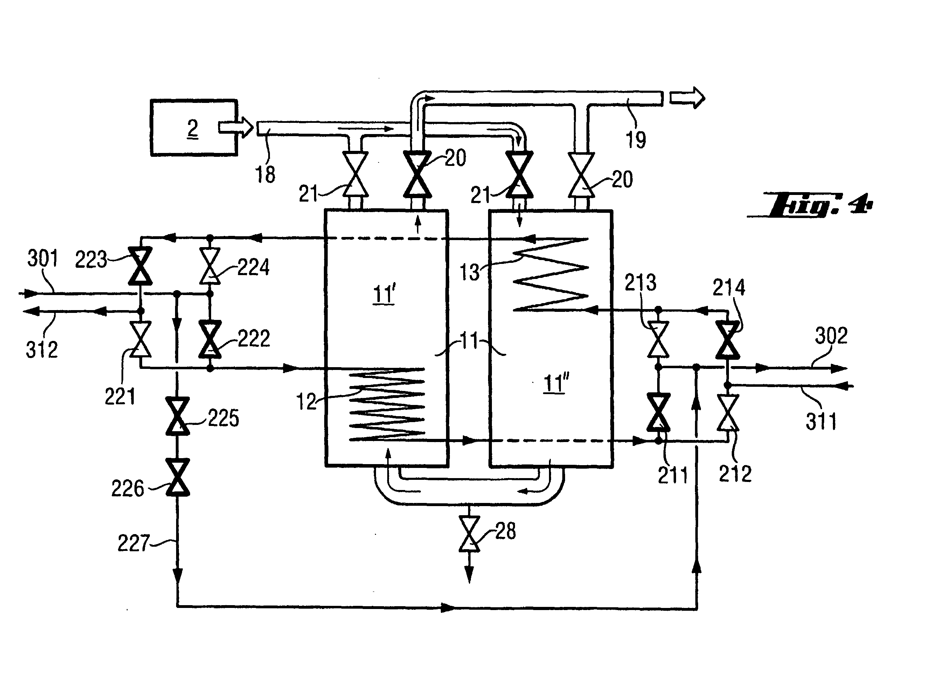

In Figure 4 there is shown an arrangement corresponding to the second mode of operation shown in Figure 3. This arrangement corresponds to a situation in which the heat transfer surfaces of the heat exchangers have been dimensioned so that the first heat exchanger 12 has been dimensioned by criteria set mainly by the first heat transfer medium circuit 311,312, i.e. to be of greater area, and the second heat exchanger 13 has been respectively dimensioned by criteria set mainly by the second heat transfer medium circuit 301,302, that is to be of smaller area. In this case, during the second mode of operation, a part of the heat transfer medium of the LT-circuit may be arranged to bypass the first heat exchanger via a conduit 227. In this case the recombined heat transfer media may have a temperature corresponding more closely to a situation when operating in the first mode of operation. The flow of gas in this case corresponds to that shown in Figure 3. The heat exchanger 13 is connected to the first heat transfer medium circuit, i.e. to HT-circuit 311,312. According to Figure 4, in order to compensate the greater power obtained by the larger surface area of the heat exchanger 12, a part of the heat transfer medium of the LT-circuit 301,302 may be guided to bypass the heat exchanger 12 through a conduit 227. The conduit 227 is advantageously provided with a closing valve 225 and control valve 226, by means of which the flow rate can be adjusted. The arrangement is operated with the second mode of operation for a time required to clean the heat exchanger 13, after which the mode of operation is changed again. The previous disclosure is merely one possibility for implementing the arrangement of heat transfer medium circuits, and in addition to the previously disclosed, the heat transfer medium circuits may be provided with separate loops operated by circulation pumps. In this manner the inlet and outlet flows of the separate loops may be separately adjusted (not shown).

A corresponding effect may also be achieved by arranging the gas-side flow so that the position of the valve is altered so that a proportion of the gases bypasses the heat exchangers by passing directly through heat exchanger space from chamber 14 to chamber 15. This may be accomplished for example so that the pair of openings, which is in principle required to be closed by each mode of operation, is not totally closed, but both of the valve openings in the chamber are left properly opened by the valves 20,21 (Fig.1).

In some cases, for example in order to ensure monitoring of the arrangement during the operation, it may be advantageous to perform the cleaning, i.e. change of the mode of operation, by operating fully manually.

The whole heat exchanger arrangement may be adapted to be such that the gas joints are below the ducts. The heat exchangers may, as to their actual connections to the heat transfer medium circuit, operate either as parallel, counter or cross flow type. The arrangement may also comprise other heat exchangers and heat transfer medium circuits.

## Claims

1. Heat recovery apparatus (10) comprising a heat transfer space (11), a gas inlet (18) for supplying gas for passage through the heat transfer space, a gas outlet (19) for removing gas after passage through the heat transfer space, at least two separate heat exchangers (12,13) arranged in the heat transfer space so that gas passing through the latter pass successively over the heat exchangers (12,13), and at least two separate heat transfer medium flow circuits (311,312,301,302), wherein the heat recovery apparatus (10) further comprises means for altering the direction of gas flow (14,15,20,21) in the heat transfer space (11) and means for (211,212,213,214;221,222,223,224) connecting the heat transfer medium flow circuits selectively to either of the at least two separate heat exchangers (12,13).

2. Heat recovery apparatus according to claim 1, **characterised in that** the at least two separate heat exchangers (12,13) comprise heat transfer surfaces of substantially corresponding heat transfer capability.

3. Heat recovery apparatus according to claim 1 or 2, **characterised in that** the gas is arranged to pass mainly vertically in the heat transfer space (11).

4. Heat recovery apparatus according to any one of the preceding claims, **characterised in that** the heat transfer space (11) comprises two parallel flow ducts (11', 11") in each of which there is arranged at least one heat exchanger (12,13), the flow ducts communicating at one of their other ends with a common space.

5. Heat recovery apparatus according to claim 4, **characterised in that** the gas inlet (18) and gas outlet (19) and the heat transfer space (11) are connected with each other by said means for altering the direction of gas flow (14,15,20,21).

6. Heat recovery apparatus according to claim 5, **characterised in that** the gas inlet (18) and the gas outlet (19) are selectively connectable to flow connection with both of the flow ducts (11',11") so that the direction of the gas flow is alterable.

7. Heat recovery apparatus according to claim 6, **characterised in that** the gas inlet (18) and gas outlet (19) are in connection with chambers (14,15) and are selectively connectable to flow connection with both of the flow ducts (11',11") by means of valves (20,21), means for positively controlling the valves of each chamber (14,15) so that a flow connection from the chamber may be established only with one of the flow ducts (11', 11") at a time, and so that the gas is caused to pass always through both of the ducts (11',11"), and that the means for (211,212,213,214; 221,222,223,224) connecting heat transfer medium flow circuits (311,312,301,302) selectively to either of the at least two separate heat exchangers (12,13) comprise valves, the operation of which is synchronisable so that one of the heat transfer medium flow circuit (311,312) operating at a higher temperature level is connectable with a heat exchanger which is upstream of a heat exchanger connected to a different heat transfer medium flow circuit (301,302) operating at a lower temperature level.

8. Heat recovery apparatus according to claim 7, **characterised in that** a controllable central processing unit or the like (1) is adapted to control the operation of the valves, the operation of the valves (20,21) being synchronised with valves (211,212,213,214,221,222,223,224) controlling the heat transfer medium by the controllable central processing unit or the like (1).

9. Heat recovery apparatus according to claim 7, **characterised in that** the heat transfer medium flow circuit (301,302) operating at lower temperature level is provided with a heat exchanger bypass conduit (227).

10. A method of minimising fouling in a heat recovery apparatus (10) comprising a heat transfer space (11) in which is arranged successively in a gas flow direction through the heat transfer space at least a first and a second heat exchanger (12,13), a gas inlet (18) and a gas outlet (19), and at least a first and a second heat transfer medium flow circuit (311,312,301,302), **characterised in that** in the first mode of operation gas is caused to flow in the heat transfer space (11) firstly through the first heat exchanger and after that through the second heat exchanger, the heat transfer medium of the first heat transfer medium flow circuit being caused to flow though the first heat exchanger and the heat transfer medium of the second heat transfer medium flow circuit is caused to flow though the second heat exchanger and, in dependence on a predetermined event, gas is caused to flow in a second mode of operation in the heat transfer space (11) firstly through the second heat exchanger and after that through the first heat exchanger, the heat transfer medium of the first heat transfer medium flow circuit being caused to flow though the second heat exchanger, and the heat transfer medium of the second heat transfer medium flow circuit being caused to flow though the first heat exchanger.

11. A method according to claims 10, **characterised in that** measurement information is collected from a heat transfer process and the information is compared with set values and in an event that measured information differs from the set values more than a predetermined amount, the mode of operation is altered from the first mode of operation to the second mode of operation and again from the second mode of operation to the first mode of operation.

12. A method according to claim 11, **characterised in that** gas pressure difference between the gas inlet (18) and the gas outlet (19), gas temperature after the heat exchangers, and/or the temperature of the heat transfer medium leaving the last heat exchanger are gathered as the measurement information.

## Patentansprüche

1. Vorrichtung zur Wärmerückgewinnung (10), umfassend einen Wärmeübertragungsraum (11), einen Gaseinlass (18) zur Gaszufuhr für die Durchleitung durch den Wärmeübertragungsraum, einen Gasauslass (19) zur Gasentfernung nach der Durchleitung durch den Wärmeübertragungsraum, wenigstens zwei getrennte Wärmetauscher (12, 13), welche so im Wärmeübertragungsraum angeordnet sind, dass Gas, welches Letzteren passiert, nacheinander über die Wärmetauscher (12, 13) strömt, und wenigstens zwei getrennte Wärmeträgerkreisläufe (311, 312, 301, 302), wobei die Vorrichtung zur Wärmerückgewinnung (10) ferner Mittel zur Richtungsänderung des Gasstroms (14, 15, 20, 21) im Wärmeübertragungsraum (11) und Mittel (211, 212, 213, 214; 221, 222, 223, 224) zum selektiven Anschluss der Wärmeträgerkreisläufe an einen der wenigstens zwei getrennten Wärmetauscher (12, 13) umfasst.

2. Vorrichtung zur Wärmerückgewinnung nach Anspruch 1, **dadurch gekennzeichnet, dass** die wenigstens zwei getrennten Wärmetauscher (12, 13) Wärmeübertragungsoberflächen mit einem im Wesentlichen übereinstimmenden Wärmeübertragungsvermögen umfassen.

3. Vorrichtung zur Wärmerückgewinnung nach Anspruch 1 oder 2, **dadurch gekennzeichnet, dass** das Gas den Wärmeübertragungsraum (11) hauptsächlich vertikal passiert.

4. Vorrichtung zur Wärmerückgewinnung nach einem der vorhergehenden Ansprüche, **dadurch gekennzeichnet, dass** der Wärmeübertragungsraum (11) zwei parallele Strömungskanäle (11', 11'') umfasst, in welchen jeweils wenigstens ein Wärmetauscher (12, 13) angeordnet ist, wobei die Strömungskanäle an einem ihrer anderen Enden mit einem gemeinsamen Raum verbunden sind.

5. Vorrichtung zur Wärmerückgewinnung nach Anspruch 4, **dadurch gekennzeichnet, dass** der Gaseinlass (18) und der Gasauslass (19) und der Wärmeübertragungsraum (11) durch das Mittel zur Richtungsänderung des Gasstroms (14, 15, 20, 21) miteinander verbunden sind.

6. Vorrichtung zur Wärmerückgewinnung nach Anspruch 5, **dadurch gekennzeichnet, dass** der Gaseinlass (18) und der Gasauslass (19) selektiv an die Strömungsverbindung der beiden Strömungskanäle (11', 11'') anschließbar sind, so dass die Richtung des Gasstroms veränderbar ist.

7. Vorrichtung zur Wärmerückgewinnung nach Anspruch 6, **dadurch gekennzeichnet, dass** der Gaseinlass (18) und der Gasauslass (19) mit Kammern (14, 15) in Verbindung stehen und selektiv durch Ventile (20, 21) in Strömungsverbindung mit den beiden Strömungskanälen (11', 11'') anschließbar sind, Mittel zur Zwangssteuerung der Ventile jeder Kammer (14, 15), so dass eine Strömungsverbindung von der Kammer mit nur jeweils einem der Strömungskanäle (11', 11'') hergestellt werden kann und so dass das Gas veranlasst wird, stets durch beide Kanäle (11', 11'') zu strömen, und dass das Mittel (211, 212, 213, 214; 221, 222, 223, 224) zum selektiven Anschluss der Wärmeträgerkreisläufe (311, 312, 301, 302) an einen der wenigstens zwei getrennten Wärmetauscher (12, 13) Ventile umfasst, deren Betrieb synchronisierbar ist, so dass einer der Wärmeträgerkreisläufe (311, 312), welcher bei einer höheren Temperatur arbeitet, an einen Wärmetauscher anschließbar ist, welcher einem Wärmetauscher vorgeschaltet ist, welcher mit einen anderen Wärmeträgerkreislauf (301, 302) verbunden ist, welcher bei einer niedrigeren Temperatur arbeitet.

8. Vorrichtung zur Wärmerückgewinnung nach Anspruch 7, **dadurch gekennzeichnet, dass** eine steuerbare zentrale Verarbeitungseinheit oder dergleichen (1) zur Betriebssteuerung der Ventile angepasst ist, wobei der Betrieb der Ventile (20, 21) mit den Ventilen (211, 212, 213, 214, 221, 222, 223, 224), welche den Wärmeträger steuern, durch die steuerbare zentrale Verarbeitungseinheit oder dergleichen (1) synchronisiert ist.

9. Vorrichtung zur Wärmerückgewinnung nach Anspruch 7, **dadurch gekennzeichnet, dass** der Wärmeträgerkreislauf (301, 302), welcher bei einer niedrigeren Temperatur arbeitet, mit einer Wärmetauscher-Umgehungsleitung (227) versehen ist.

10. Verfahren zur Minimierung von Ablagerungen in einer Vorrichtung zur Wärmerückgewinnung (10), welche einen Wärmeübertragungsraum (11) umfasst, in welchem in einer Gasströmungsrichtung durch den Wärmeübertragungsraum nacheinander wenigstens ein erster und ein zweiter Wärmetauscher (12, 13), ein Gaseinlass (18) und ein Gasauslass (19) und wenigstens ein erster und ein zweiter Wärmeträgerkreislauf (311, 312, 301, 302) angeordnet sind, **dadurch gekennzeichnet, dass** in der ersten Betriebsart Gas im Wärmeübertragungsraum (11) veranlasst wird, zunächst durch den ersten Wärmetauscher und danach durch den zweiten Wärmetauscher zu strömen, wobei der Wärmeträger des ersten Wärmeträgerkreislaufs veranlasst wird, durch den ersten Wärmetauscher zu strömen, und der Wärmeträger des zweiten Wärmeträgerkreislaufs veranlasst wird, durch den zweiten Wärmetauscher zu strömen, und, abhängig von einem vorbestimmten Ereignis, in einer zweiten Betriebsart Gas im Wärmeübertragungsraum (11) veranlasst wird, zunächst durch den zweiten Wärmetauscher und danach durch den ersten Wärmetauscher zu strömen, wobei der Wärmeträger des ersten Wärmeträgerkreislaufs veranlasst wird, durch den zweiten Wärmetauscher zu strömen, und der Wärmeträger des zweiten Wärmeträgerkreislaufs veranlasst wird, durch den ersten Wärmetauscher zu strömen.

11. Verfahren nach Anspruch 10, **dadurch gekennzeichnet, dass** aus einem Wärmeübertragungsvorgang Messinformationen gesammelt werden und die Informationen mit gesetzten Werten verglichen werden und im Fall, dass die gemessenen Informationen sich um mehr als eine vorbestimmte Größe von den gesetzten Werten unterscheiden, die Betriebsart von der ersten Betriebsart in die zweite Betriebsart und von der zweiten Betriebsart wieder in die erste Betriebsart geändert wird.

12. Verfahren nach Anspruch 11, **dadurch gekennzeichnet, dass** die Gasdruckdifferenz zwischen dem Gaseinlass (18) und dem Gasauslass (19), die Gastemperatur nach den Wärmetauschern und/oder die Temperatur des Wärmeträgers, welcher aus dem letzten Wärmetauscher austritt, als Messinformationen gesammelt werden.

## Revendications

1. Dispositif de récupération de chaleur (10) comprenant un espace de transfert de chaleur (11), une entrée de gaz (18) pour amener un gaz à passer à travers l'espace de transfert de chaleur, une sortie de gaz (19) pour évacuer le gaz après son passage à travers l'espace de transfert de chaleur, au moins deux échangeurs de chaleur séparés (12, 13) arrangés dans l'espace de transfert de chaleur de telle sorte que le gaz qui passe à travers ce dernier passe successivement sur les échangeurs de chaleur (12, 13), et au moins deux circuits d'écoulement d'agent de transfert de chaleur (311, 312, 301, 302), dans lequel le dispositif de récupération de chaleur (10) comprend en outre des moyens (14, 15, 20, 21) pour modifier la direction de l'écoulement de gaz dans l'espace de transfert de chaleur (11), et des moyens (211, 212, 213, 214; 221, 222, 223, 224) pour relier les circuits d'écoulement d'agent de transfert de chaleur d'une façon sélective à l'un ou l'autre des au moins deux échangeurs de chaleur séparés (12, 13).

2. Dispositif de récupération de chaleur suivant la revendication 1, **caractérisé en ce que** les au moins deux échangeurs de chaleur séparés (12, 13) comprennent des surfaces de transfert de chaleur présentant une capacité de transfert de chaleur substantiellement équivalente.

3. Dispositif de récupération de chaleur suivant la revendication 1 ou 2, **caractérisé en ce que** le gaz est arrangé de manière à passer principalement verticalement dans l'espace de transfert de chaleur (11).

4. Dispositif de récupération de chaleur suivant l'une quelconque des revendications précédentes, **caractérisé en ce que** l'espace de transfert de chaleur (11) comprend deux conduits d'écoulement parallèles (11', 11"), dans chacun desquels au moins un échangeur de chaleur (12, 13) est arrangé, les conduits d'écoulement communiquant à l'une de leurs autres extrémités avec un espace commun.

5. Dispositif de récupération de chaleur suivant la revendication 4, **caractérisé en ce que** l'entrée de gaz (18), la sortie de gaz (19) et l'espace de transfert de chaleur (11) sont reliés les uns aux autres par lesdits moyens (14, 15, 20, 21) pour modifier la direction de l'écoulement de gaz.

6. Dispositif de récupération de chaleur suivant la revendication 5, **caractérisé en ce que** l'entrée de gaz (18) et la sortie de gaz (19) peuvent être reliées d'une façon sélective à une connexion d'écoulement avec les deux conduits d'écoulement (11', 11"), de telle sorte que la direction de l'écoulement de gaz puisse être modifiée.

7. Dispositif de récupération de chaleur suivant la revendication 6, **caractérisé en ce que** l'entrée de gaz (18) et la sortie de gaz (19) sont en communication avec des chambres (14, 15) et peuvent être reliées dune façon sélective à une connexion d'écoulement avec les deux conduits d'écoulement (11', 11") au moyen de vannes (20, 21) et de moyens pour commander d'une façon positive les vannes de chaque chambre (14, 15), de telle sorte qu'une connexion d'écoulement puisse être établie à partir de la chambre avec un seul des conduits d'écoulement (11', 11") à la fois, et de telle sorte que le gaz soit entraîné à toujours passer à travers les deux conduits (11', 11"), et **en ce que** les moyens (211, 212, 213, 214; 221, 222, 223, 224) pour relier les circuits d'écoulement d'agent de transfert de chaleur (311, 312, 301, 302) d'une façon sélective à l'un ou l'autre des au moins deux échangeurs de chaleur séparés (12, 13) comprennent des vannes, dont le fonctionnement peut être synchronisé de telle sorte que l'un des circuits d'écoulement d'agent de transfert de chaleur (311, 312) qui fonctionne à un niveau de température plus élevé puisse être relié à un échangeur de chaleur qui se trouve en amont d'un échangeur de chaleur relié à un circuit d'écoulement d'agent de transfert de chaleur différent (301, 302) qui fonctionne à un niveau de température inférieur.

8. Dispositif de récupération de chaleur suivant la revendication 7, **caractérisé en ce qu'**une unité centrale de traitement contrôlable ou analogue (1) est apte à commander le fonctionnement des vannes, le fonctionnement des vannes (20, 21) étant synchronisé avec les vannes (211, 212, 213, 214, 221, 222; 223, 224) commandant l'agent de transfert de chaleur par l'unité centrale de traitement contrôlable ou analogue (1).

9. Dispositif de récupération de chaleur suivant la revendication 7, **caractérisé en ce que** le circuit d'écoulement d'agent de transfert de chaleur (301, 302) qui fonctionne à un niveau de température inférieur est pourvu d'un conduit de contournement (227) de l'échangeur de chaleur.

10. Procédé pour minimiser l'encrassement dans un dispositif de récupération de chaleur (10), comprenant un espace de transfert de chaleur (11) dans lequel sont arrangés successivement dans une direction d'écoulement de gaz à travers l'espace de transfert de chaleur au moins un premier et un deuxième échangeurs de chaleur (12, 13), une entrée de gaz (18) et une sortie de gaz (19), et au moins un premier et un deuxième circuits d'écoulement d'agent de transfert de chaleur (311, 312, 301, 302), **caractérisé en ce que**, dans le premier mode de fonctionnement, un gaz est entraîné à s'écouler dans l'espace de transfert de chaleur (11), en premier lieu à travers le premier échangeur de chaleur, et ensuite à travers le deuxième échangeur de chaleur, l'agent de transfert de chaleur du premier circuit d'écoulement d'agent de transfert de chaleur étant entraîné à s'écouler à travers le premier échangeur de chaleur, et l'agent de transfert de chaleur du deuxième circuit d'écoulement d'agent de transfert de chaleur étant entraîné à s'écouler à travers le deuxième échangeur de chaleur, et, en fonction d'une situation prédéterminée, dans un deuxième mode de fonctionnement, un gaz est entraîné à s'écouler dans l'espace de transfert de chaleur (11), en premier lieu à travers le deuxième échangeur de chaleur et ensuite à travers le premier échangeur de chaleur, l'agent de transfert de chaleur du premier circuit d'écoulement d'agent de transfert de chaleur étant entraîné à s'écouler à travers le deuxième échangeur de chaleur, et l'agent de transfert de chaleur du deuxième circuit d'écoulement d'agent de transfert de chaleur étant entraîné à s'écouler à travers le premier échangeur de chaleur.

11. Procédé suivant la revendication 10, **caractérisé en ce que** des informations de mesure sont récoltées à partir d'un procédé de transfert de chaleur, et les informations sont comparées avec des valeurs de consigne, et dans le cas où les informations mesurées diffèrent des valeurs de consigne de plus que dune quantité prédéterminée, le mode de fonctionnement est modifié et passe du premier mode de fonctionnement au deuxième mode de fonctionnement et à nouveau du deuxième mode de fonctionnement au premier mode de fonctionnement.

12. Procédé suivant la revendication 11, **caractérisé en ce que** la différence de pression de gaz entre l'entrée de gaz (18) et la sortie de gaz (19), la température du gaz après les échangeurs de chaleur, et/ou la température de l'agent de transfert de chaleur qui quitte le dernier échangeur de chaleur sont recueillies comme informations de mesure.
